# FASCICULE DE BREVET EUROPEEN

(11) **EP 2 893 222 B1**
(45) Date de publication et mention de la délivrance du brevet: **01.03.2017**
(21) Numéro de dépôt: 13766607.9
(22) Date de dépôt: 03.09.2013
(51) Int. Cl.: F16H 57/04, F15D 1/02, F16K 47/08, F16L 55/027

(54) **RÉDUCTEUR À TRAIN ÉPICYCLOÏDAL, NOTAMMENT POUR TURBOMACHINE**
EPIZYKLISCHES UNTERSETZUNGSGETRIEBE, INSBESONDERE FÜR TURBOMASCHINE
EPICYCLIC REDUCTION GEAR, NOTABLY FOR TURBOMACHINE

(30) Priorité: 04.09.2012 FR 1258231
(43) Date de publication de la demande: 15.07.2015
(73) Titulaire: Safran Transmission Systems, 92700 Colombes (FR)
(72) Inventeur: FERAUD, Benjamin, 92500 Rueil-Malmaison (FR); BECK, Guillaume, 60500 Chantilly (FR); MORELLI, Boris, 75014 Paris (FR); PELTIER, Jordane, 75011 Paris (FR)
(74) Mandataire: Robert, Mathias
(86) Numéro de dépôt international: PCT/FR2013/052016
(87) Numéro de publication internationale: WO 2014/037659

(56) Documents cités:
- EP-A1- 1 703 174
- DE-A1- 3 807 954
- DE-A1-102004 021 967
- FR-A1- 2 340 465
- FR-A1- 2 888 301
- SU-A2- 724 806
- US-A- 3 469 656
- US-A1- 2009 084 448

## Description

La présente invention concerne un réducteur à train épicycloïdal, notamment pour turbomachine, comportant un dispositif formant un canal de circulation de fluide apte à générer une perte de charge.

Un train épicycloïdal comporte classiquement un planétaire interne et un planétaire externe coaxiaux, le planétaire interne étant mobile en rotation autour de son axe, le planétaire externe étant fixe, au moins un satellite monté de façon mobile en rotation sur un porte-satellites et engrenant à la fois avec le planétaire interne et avec le planétaire externe, le porte-satellites étant pivotant autour de l'axe du planétaire interne et du planétaire externe. Généralement, l'entrée est formée par le planétaire interne, également appelé soleil, et la sortie est formée par le porte-satellites. Le planétaire externe est également appelé couronne.

Dans une turbomachine, des trains épicycloïdaux sont notamment utilisés en tant que réducteur de vitesse pour réduire la vitesse de rotation du rotor de la soufflante, indépendamment de la vitesse de rotation de la turbine.

Le document EP 1 703 174 décrit un tel réducteur à train épicycloïdal, dans lequel les roues dentées formant les satellites sont montées sur des pivots du porte-satellites par l'intermédiaire de paliers lisses. En d'autres termes, le porte-satellites comporte des pivots cylindriques engagés dans des trous cylindriques des satellites. Le réducteur comporte en outre un canal d'amenée d'huile débouchant au niveau de l'interface entre lesdites surfaces cylindriques. En fonctionnement, une couche d'huile doit être présente au niveau de l'interface, afin d'éviter le grippage.

Les paliers lisses sont globalement moins lourds, moins encombrants et plus fiables que des paliers utilisant des éléments roulants et ils ont une durée de vie quasiment infinie, pour autant qu'ils soient constamment alimentés en huile et que cette huile ne comporte pas de particules abrasives.

En cas de panne dans le circuit d'amenée d'huile, par exemple en cas de panne d'une pompe, il est nécessaire de maintenir l'alimentation en huile du palier lisse pendant une période suffisante pour démarrer une pompe auxiliaire ou arrêter la turbomachine, par exemple. Cette période est par exemple de plusieurs dizaines de secondes.

Pour cela, le document EP 1 703 174 prévoit de former des accumulateurs dans le porte-satellites, chaque accumulateur étant apte à fournir de l'huile à un palier lisse en cas de panne, pendant une durée déterminée. La structure de ces accumulateurs et leurs emplacements rendent difficile la réalisation du porte-satellites et augmentent les dimensions et la masse de ce dernier.

En outre, il est relativement difficile de contrôler le débit d'huile alimentant le palier lisse en cas de panne. En particulier, ce débit doit être relativement faible afin de pouvoir fournir de l'huile sur une durée suffisamment longue, tout en étant suffisant pour éviter le grippage.

En général, on utilise un canal de faible diamètre afin de limiter un débit de fluide. Dans cette application toutefois, un canal ayant un diamètre suffisamment faible sur une longueur relativement importante (par exemple une longueur de l'ordre de 100 fois le diamètre du canal) est non seulement difficile à réaliser mais il est également susceptible d'être bouché par des particules contenues dans le circuit d'huile. Une autre solution consisterait à utiliser une crépine à l'entrée du canal de façon à limiter le débit mais dans ce cas également, il existe un risque de bouchage de la crépine par les particules.

L'invention a notamment pour but d'apporter une solution simple, efficace et économique à ce problème.

Le document FR2888301 divulgue un réducteur à train épicycloïdal selon le préambule de la revendication 1.

A cet effet, l'invention propose un dispositif formant un canal de circulation de fluide apte à générer une perte de charge, réalisé par empilement d'au moins deux éléments, chaque élément comportant un canal de passage de fluide apte à générer une perte de charge et comprenant une entrée et une sortie, la sortie, respectivement l'entrée, du canal de l'un des éléments étant reliée à l'entrée, respectivement à la sortie, du canal de l'autre élément.

De tels éléments individuels sont facilement réalisables et forment après assemblage un canal continu constitué de la suite des canaux des différents éléments assemblés. Le canal du dispositif a une perte de charge d'autant plus grande que le nombre d'éléments est important. En outre, le canal de chaque élément n'a pas nécessairement une section très réduite, ce qui permet d'éviter le bouchage du dispositif par des particules présentes dans le fluide.

De préférence, le dispositif comporte des moyens de positionnement des éléments les uns par rapport aux autres.

Dans ce cas, l'un au moins des éléments peut comporter un pion de centrage coopérant avec un logement complémentaire d'un élément adjacent.

De cette manière, on s'assure que l'entrée ou la sortie du canal d'un élément est située en regard de la sortie ou de l'entrée du canal de l'élément adjacent. On garantit ainsi la continuité du canal du dispositif.

Avantageusement, le canal de chaque élément a une forme générale de labyrinthe et comporte au moins une zone coudée, ce qui permet d'augmenter les pertes de charge sans avoir à réduire la section du canal.

Selon une forme de réalisation de l'invention, le canal de l'un au moins des éléments comporte un renfoncement destiné à piéger des particules.

Les particules sont ainsi piégées par le dispositif et ne sont par relarguées en aval, par exemple au niveau d'un palier lisse.

En outre, chaque élément peut comporter deux surfaces opposées, le canal étant formé au niveau de l'une des surfaces, l'entrée ou la sortie du canal comportant un trou traversant ledit élément et débouchant sur l'autre surface.

Des éléments ayant une telle structure sont de fabrication relativement aisée.

En outre, le dispositif peut comporter plusieurs éléments cylindriques et de même structure, l'entrée et la sortie du canal de chacun desdits éléments étant écartées angulairement d'un angle déterminé, les moyens de positionnement permettant de décaler angulairement deux éléments adjacents de la même valeur d'angle.

L'invention concerne en outre un réducteur à train épicycloïdal, notamment pour turbomachine, comportant un planétaire interne et un planétaire externe coaxiaux, le planétaire interne étant mobile en rotation autour de son axe, le planétaire externe étant fixe, au moins un satellite monté de façon mobile en rotation sur un porte-satellites et engrenant à la fois avec le planétaire interne et avec le planétaire externe, le porte-satellites étant pivotant autour de l'axe du planétaire interne et du planétaire externe, le satellite comportant une surface interne cylindrique montée pivotante autour d'une surface cylindrique du porte-satellites, le réducteur comportant en outre des moyens d'amenée d'huile au niveau de l'interface entre lesdites surfaces cylindriques, caractérisé en ce que les moyens d'amenée d'huile comportent une chambre ménagée dans le porte-satellites, destinée à former un volume tampon d'huile, et comportant une zone dite basse, écartée de l'axe de rotation du porte-satellites, une zone dite haute, rapprochée de l'axe de rotation du porte-satellites, au moins un canal principal débouchant au niveau de ladite interface et au niveau de la zone haute, et au moins un canal secondaire débouchant au niveau de ladite interface et au niveau de la zone basse, ledit canal secondaire comportant un dispositif du type précité.

En fonctionnement, sous l'effet de la force centrifuge, l'huile présente dans la chambre est repoussée radialement vers l'extérieur. La chambre ménagée dans le porte-satellites se remplit donc d'abord en zone basse, écartée de l'axe de rotation du porte-satellites, puis en zone haute.

En fonctionnement normal, c'est-à-dire en l'absence de panne dans le circuit d'amenée d'huile, le débit d'huile qui arrive dans la chambre est important et le niveau d'huile atteint par conséquent la zone haute de ladite chambre. L'huile peut alors s'échapper par le canal principal afin d'alimenter le palier lisse, c'est-à-dire l'interface entre les surfaces cylindriques du porte-satellites et du satellite.

Il est à noter que, compte tenu de ses dimensions, le canal secondaire ne permet pas de faire passer tout le débit d'huile, de sorte que la chambre se remplit en fonctionnement normal.

En cas de panne, le débit d'huile qui arrive dans la chambre devient nul et le volume d'huile dans la chambre diminue et n'atteint plus la zone haute : l'huile ne peut plus s'échapper par le canal principal, mais uniquement par le canal secondaire. Le débit d'huile alimentant le palier lisse est alors réduit, mais est suffisant pour éviter le grippage de ce palier pendant une période de temps limitée, nécessaire par exemple au démarrage d'une pompe auxiliaire ou à l'arrêt de la turbomachine (fonctionnement dégradé du palier lisse).

L'invention permet en outre de réaliser un canal secondaire ayant une perte de charge suffisamment élevée et contrôlée pour générer un faible débit d'huile en cas de panne, tout en évitant les risques de bouchage du canal secondaire par des particules contenues dans l'huile.

De préférence, le renfoncement s'étend depuis le canal de l'élément correspondant dans une direction opposée à l'axe de rotation du porte-satellites, de façon à pouvoir piéger des particules par centrifugation.

En outre, chaque élément peut comporter une première surface tournée vers l'axe de rotation du porte-satellites et une seconde surface opposée à la première surface, le canal de chaque élément étant formé au niveau de la première surface, la sortie dudit canal comportant un trou traversant ledit élément et débouchant sur la seconde surface.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique de face d'un train épicycloïdal,
- la figure 2 est un schéma cinématique d'un train épicycloïdal,
- la figure 3 est une vue en coupe transversale d'une partie d'un porte-satellites et d'un satellite d'un réducteur selon l'invention,
- les figures 4 et 5 sont des vues en coupe longitudinale d'une partie du porte-satellites, respectivement selon les lignes A et B de la figure 3,
- la figure 6 est une vue de détail et en coupe d'une partie du porte-satellites dans laquelle est monté le dispositif selon l'invention,
- les figures 7 et 8 sont des vues en perspective d'un élément du dispositif selon l'invention,
- la figure 9 est une vue en perspective illustrant l'empilement de deux éléments identiques.

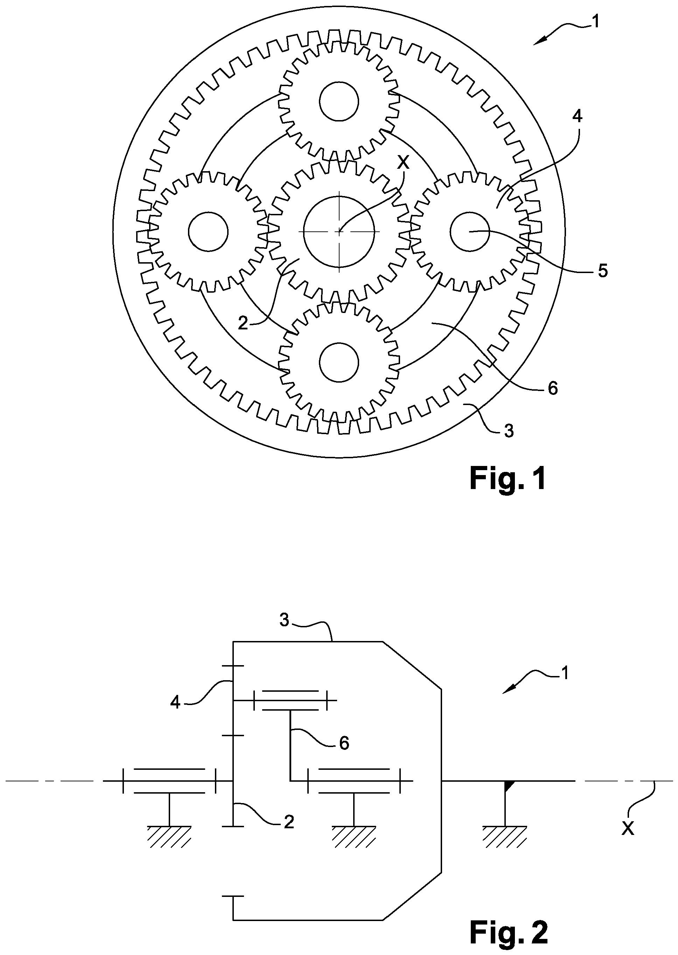

Les figures 1 et 2 illustrent schématiquement la structure d'un réducteur à train épicycloïdal 1 selon l'invention. Celui-ci comporte classiquement un planétaire interne 2 (également appelé soleil) et un planétaire externe 3 (également appelé couronne) coaxiaux. Le planétaire interne 2 est mobile en rotation autour de son axe X, le planétaire externe 3 étant fixe. Le réducteur 1 comporte en outre des satellites 4 montés de façon mobile en rotation sur des pivots 5 d'un porte-satellites 6. Chaque satellite 5 engrène à la fois avec le planétaire interne 2 et avec le planétaire externe 3. Le porte-satellites 6 est pivotant autour de l'axe X du planétaire interne 2 et du planétaire externe 3.

L'entrée est formée par le planétaire interne 2 et la sortie est formée par le porte-satellites 6.

Dans une turbomachine, des trains épicycloïdaux 1 sont notamment utilisés en tant que réducteur de vitesse pour réduire la vitesse de rotation du rotor de la soufflante, indépendamment de la vitesse de rotation de la turbine.

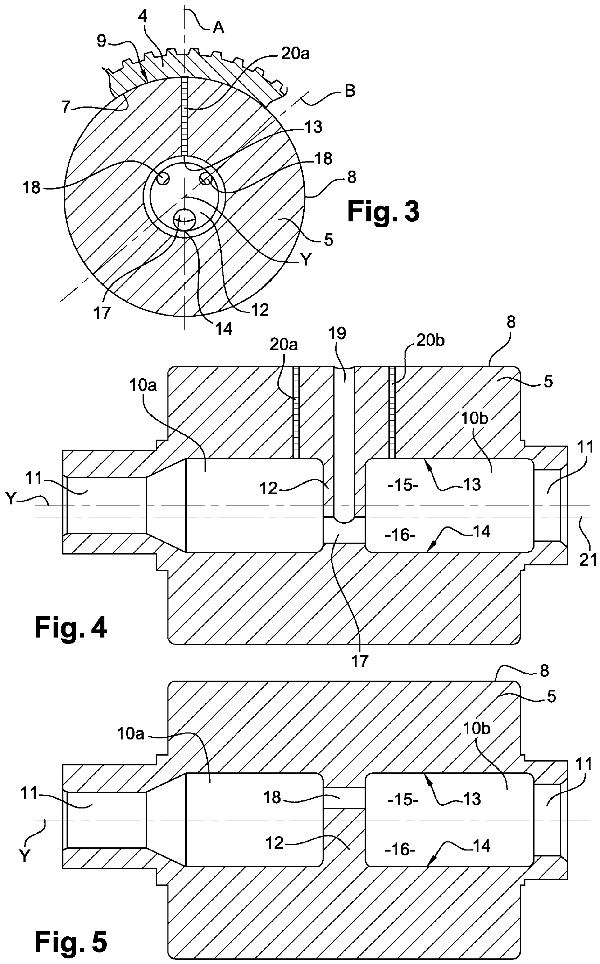

Comme cela est mieux visible aux figures 3 à 5, chaque satellite 4 comporte une surface interne cylindrique 7 montée pivotante autour d'une surface cylindrique 8 du pivot 5 correspondant du porte-satellites 6, de façon à former un palier lisse.

Il est donc nécessaire d'alimenter en huile l'interface 9 entre ces deux surfaces cylindriques 7, 8. Pour cela, le réducteur 1 comporte des moyens d'amenée comportant une chambre 10 s'étendant sensiblement selon l'axe Y de chaque pivot 5, l'une au moins des extrémités 11 de la chambre 10 étant raccordée à un canal d'entrée d'huile. Si une seule des extrémités 11 forme une arrivée d'huile, l'autre extrémité est bouchée.

La chambre 10 est globalement cylindrique et comporte plus particulièrement deux parties 10a, 10b séparées par une cloison médiane 12 s'étendant radialement. Les extrémités latérales 11 de la chambre 10 comportent des trous de plus faible diamètre que la chambre 10, dont l'un au moins forme une entrée d'huile, comme indiqué précédemment.

La ligne référencée 13 forme le point dit le plus bas de la chambre 10, c'est-à-dire le point le plus écarté de l'axe de rotation X du porte-satellites 6. A l'inverse, la ligne référencée 14 forme le point le plus haut de la chambre 10, c'est-à-dire le point le plus rapproché de l'axe de rotation X du porte-satellites 6. De même, les zones dites basse et haute sont référencées respectivement 15 et 16. L'axe X est situé dans le plan de coupe A de la figure 3 mais n'est pas visible sur les figures 3 à 5.

En fonctionnement, sous l'effet de la force centrifuge générée par la rotation du porte-satellites 6, l'huile est repoussée dans la chambre 10 radialement vers l'extérieur. La chambre 10 se remplit donc d'abord en zone basse 15, puis en zone haute 16.

La paroi médiane 12 est traversée par un orifice 17 débouchant dans les zones hautes 16 des parties 10a, 10b de la chambre 10. La paroi médiane 12 est en outre traversée par deux orifices 18 débouchant dans les zones basses 15 des parties 10a, 10b de la chambre 10. Les orifices 18 sont situés de part et d'autre du plan A de la figure 3, c'est-à-dire de part et d'autre du plan radial passant par l'axe X de rotation du porte-satellites 6 et par l'axe Y de la chambre 10 et du pivot 5 correspondants. Le diamètre de chaque orifice 18 peut être inférieur au diamètre de l'orifice 17.

Un canal principal 19 s'étend radialement dans la cloison médiane 12 et débouche au niveau de la paroi cylindrique externe 8 du pivot 5 et dans l'orifice 17.

Dans la forme de réalisation des figures 3 à 5, chaque partie 10a, 10b de la chambre 10 comporte en outre un canal secondaire 20a, 20b s'étendant radialement, débouchant au niveau de la paroi cylindrique externe 8 du pivot 5 et débouchant au point le plus bas 13 de la partie correspondante 10a, 10b de la chambre 10.

La section de chaque canal secondaire 20a, 20b est inférieure à la section du canal principal 19.

En fonctionnement normal, de l'huile pénètre dans la chambre 10 avec un débit suffisant pour que le niveau d'huile soit situé dans la zone haute 16 de la chambre 10. Le volume d'huile est égal dans les deux parties 10a, 10b de la chambre 10, du fait de la communication entre ces parties, à la fois par les orifices 18 et par l'orifice 17.

L'huile pénètre alors dans le canal principal 19 et est amenée par centrifugation jusqu'au niveau de l'interface 9.

La section du canal principal 19 est dimensionnée de façon à obtenir à l'interface 9 un film d'huile dont l'épaisseur correspond aux spécifications imposées ou calculées pour obtenir un bon fonctionnement du palier lisse et éviter en particulier tout phénomène de grippage.

En cas de panne, le volume d'huile diminue rapidement, jusqu'à atteindre le niveau référencé 21 à la figure 3, à partir duquel l'huile ne peut plus pénétrer dans le canal principal 19, à travers l'orifice 17. A partir de cet instant, l'huile ne peut s'échapper (sous l'effet de la centrifugation) que par les canaux secondaires 20a, 20b. Dans cette phase de fonctionnement dégradé, un débit d'huile suffisant atteint l'interface 9 par l'intermédiaire des canaux secondaires 20a, 20b, de façon à éviter le grippage du palier lisse pendant une période donnée, par exemple de l'ordre de 30 secondes. Cette période doit être suffisante pour permettre par exemple le redémarrage d'une pompe auxiliaire ou l'arrêt de la turbomachine. Les sections des canaux secondaires 20a, 20b sont donc déterminées de façon à pouvoir autoriser un tel mode dégradé pendant la durée voulue.

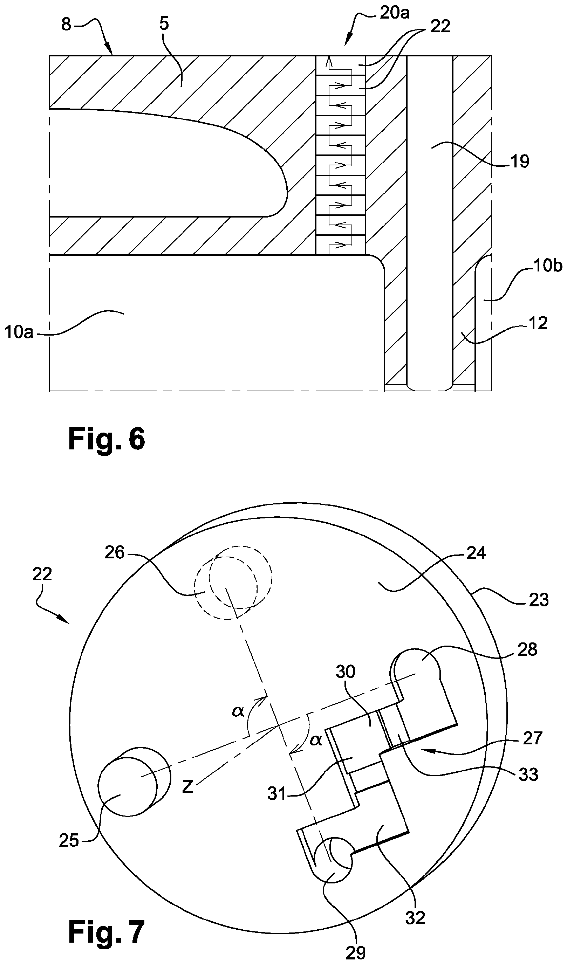

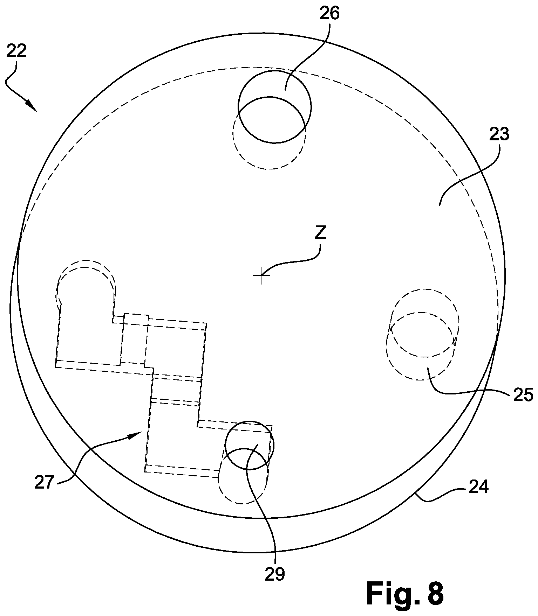

Comme cela est mieux visible aux figures 6 à 9, chaque canal secondaire 20a, 20b est formé par un dispositif comportant un empilement de plusieurs éléments identiques 22, la structure d'un élément 22 étant représentée aux figures 7 et 8.

Chaque élément 22 a une forme générale cylindrique et comporte une face dite basse 23, éloignée de l'axe X de rotation du porte-satellites 6, et une face opposée 24 dite haute, rapprochée de cet axe X. Les deux faces 23, 24 sont parallèles l'une par rapport à l'autre. L'axe de chaque élément 22 porte la référence Z.

Un pion de centrage 25 fait saillie depuis la face haute 24, un évidement 26 de forme correspondante étant ménagé dans la face basse 23. En variante, l'inverse peut être prévu.

Un canal 27 est en outre formé dans la face haute 24, sur une partie de l'épaisseur de l'élément 22. Le canal 27 a une section globalement rectangulaire ou carrée. Il comporte une entrée 28 et une sortie 29 reliées par une première, une deuxième et une troisième parties rectilignes successives, portant respectivement les références 30, 31, 32. La première partie 30 est reliée à l'entrée 28. La deuxième partie 31 s'étend sensiblement perpendiculairement à la première partie 30 de façon à former un premier coude. De même la troisième partie 32 s'étend sensiblement perpendiculairement à la deuxième partie 31 de façon à former un second coude. La troisième partie 32 est en outre reliée à la sortie 29. Cette dernière est formée par un trou traversant l'élément 22 et débouchant au niveau de la face basse 23 de l'élément 22.

La première partie 30 et la deuxième partie 31 comportent chacune un renfoncement 33 s'étendant sur toute la largeur de la partie correspondante 30, 31. Chaque renfoncement 33 s'étend en direction de la face basse 23, depuis le fond du canal 27.

La paroi de fond de chaque renfoncement 33 peut être globalement oblique par rapport aux faces basse 23 et haute 24 de l'élément 22, la zone la plus renfoncée étant alors située du côté de l'entrée 28.

L'entrée 28 et la sortie 29 du canal 27 sont décalées angulairement l'une de l'autre d'un angle α par rapport à l'axe Z. Dans l'exemple représenté aux figures, cet angle α est de l'ordre de 90°. Le pion 25 et le renfoncement 26 sont également décalés de la même valeur d'angle α.

Comme indiqué précédemment, le dispositif est réalisé par empilement de plusieurs éléments 22 identiques. Ainsi, le pion 25 d'un élément 22 est engagé dans l'évidement 26 d'un élément 22 adjacent et la sortie 29 du canal 27 d'un élément 22 est située en regard de l'entrée 28 du canal 27 d'un élément 22 adjacent, de manière à former un canal secondaire 20a, 20b continu.

On notera que les éléments 22 situés aux extrémités de l'empilement peuvent présenter une structure différente des autres. En effet, l'élément dit haut, c'est-à-dire l'élément de l'empilement qui est le plus rapproché de l'axe X, peut être dépourvu de pion 25. En outre, l'élément dit bas, c'est-à-dire l'élément le plus éloigné de l'axe X, peut être dépourvu d'évidement 26.

En outre, les différents éléments 22 empilés peuvent être maintenus à l'aide de moyens de fixation appropriés (non représentés), tels par exemple qu'un système d'épaulement et de bride opposés, des moyens d'arrêts de type circlips ou encore un système de vis. En variante, les différents éléments 22 peuvent être frettés dans un trou du pivot 5. Ces moyens de fixation permettent de maintenir en contact les faces basses 23 et hautes 24 des différents éléments 22, de façon à assurer une certaine étanchéité du canal secondaire 20a, 20b.

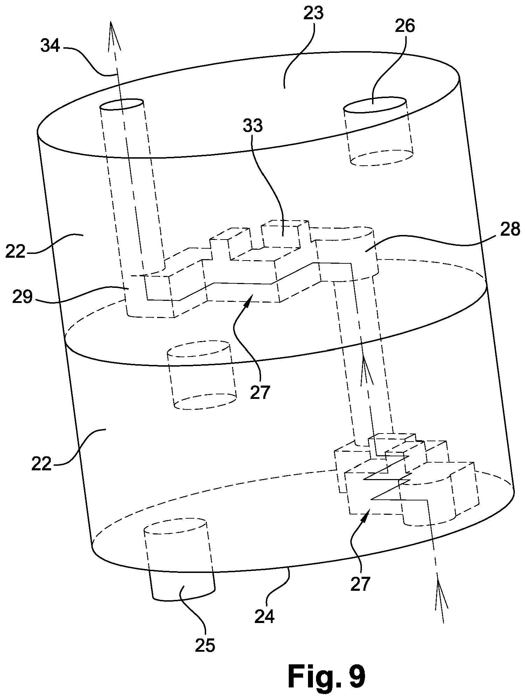

En fonctionnement, lors d'une panne, l'huile pénètre par l'entrée 28 de l'élément 22 le plus haut, progresse dans les canaux 27 des différents éléments 22 successifs et s'échappe par la sortie 29 de l'élément 22 le plus bas afin d'alimenter l'interface 9, comme cela est illustré par la flèche 34 à la figure 9. Les coudes successifs des éléments 22 forment des pertes de charges, de façon à obtenir un débit limité d'huile dans le canal secondaire 20a, 20b, tout en ayant une section de canal suffisamment importante pour éviter tout phénomène de bouchage par des particules contenues dans l'huile. En outre, en fonctionnement, ces particules sont piégées par centrifugation dans les renfoncements 33, afin d'éviter qu'elles ne soient entraînées vers l'interface 9.

## Revendications

1. Réducteur à train épicycloïdal (1), notamment pour turbomachine, comportant un planétaire interne (2) et un planétaire externe (3) coaxiaux, le planétaire interne (2) étant mobile en rotation autour de son axe (X), le planétaire externe (3) étant fixe, au moins un satellite (4) monté de façon mobile en rotation sur un porte-satellites (6) et engrenant à la fois avec le planétaire interne (2) et avec le planétaire externe (3), le porte-satellites (6) étant pivotant autour de l'axe (X) du planétaire interne (2) et du planétaire externe (3), le satellite (4) comportant une surface interne (7) cylindrique montée pivotante autour d'une surface (8) cylindrique du porte-satellites (6), le réducteur (1) comportant en outre des moyens d'amenée d'huile au niveau de l'interface (9) entre lesdites surfaces cylindriques (7, 8), les moyens d'amenée d'huile comportant une chambre (10) ménagée dans le porte-satellites (6), destinée à former un volume tampon d'huile, et comportant une zone dite basse (15), écartée de l'axe de rotation (X) du porte-satellites (6), une zone dite haute (16), rapprochée de l'axe (X) de rotation du porte-satellites (6), au moins un canal principal (19) débouchant au niveau de ladite interface (9) et au niveau de la zone haute (16), et au moins un canal secondaire (20a, 20b) débouchant au niveau de ladite interface (9) et au niveau de la zone basse (15), **caractérisé en ce que** ledit canal secondaire (20a, 20b) comporte un dispositif apte à générer une perte de charge, réalisé par empilement d'au moins deux éléments (22), chaque élément (22) comportant un canal (27) de passage de fluide apte à générer une perte de charge et comprenant une entrée (28) et une sortie (29), la sortie (29), respectivement l'entrée (28), du canal (27) de l'un des éléments (22) étant reliée à l'entrée (28), respectivement à la sortie (29), du canal (27) de l'autre élément (22).

2. Réducteur selon la revendication 1, **caractérisé en ce que** le dispositif apte à générer une perte de charge comporte des moyens (25, 26) de positionnement des éléments (22) les uns par rapport aux autres.

3. Réducteur selon la revendication 2, **caractérisé en ce que** l'un au moins des éléments (22) comporte un pion de centrage (25) coopérant avec un logement complémentaire (26) d'un élément (22) adjacent.

4. Réducteur selon l'une des revendications 1 à 3, **caractérisé en ce que** le canal (27) de chaque élément (22) a une forme générale de labyrinthe et comporte au moins une zone coudée (30, 31, 32).

5. Réducteur selon l'une des revendications 1 à 4, **caractérisé en ce que** le canal (27) de l'un au moins des éléments (22) comporte un renfoncement (33) destiné à piéger des particules.

6. Réducteur selon l'une des revendications 1 à 5, **caractérisé en ce que** chaque élément (22) comporte deux surfaces opposées (23, 24), le canal (27) étant formé au niveau de l'une (24) des surfaces, l'entrée (28) ou la sortie (29) du canal (27) comportant un trou traversant ledit élément (22) et débouchant sur l'autre surface (23).

7. Réducteur selon l'ensemble des revendications 1 et 2, **caractérisé en ce qu'**il comporte plusieurs éléments (22) cylindriques et de même structure, l'entrée (28) et la sortie (29) du canal (27) de chacun desdits éléments (22) étant écartées angulairement d'un angle (α) déterminé, les moyens de positionnement (25, 26) permettant de décaler angulairement deux éléments adjacents (22) de la même valeur d'angle (α).

8. Réducteur selon la revendication 5, **caractérisé en ce que** le renfoncement (33) s'étend depuis le canal (27) de l'élément (22) correspondant dans une direction opposée à l'axe de rotation (X) du porte-satellites (6), de façon à pouvoir piéger des particules par centrifugation.

9. Réducteur selon la revendication 6, **caractérisé en ce que** chaque élément (22) comporte une première surface (24) tournée vers l'axe de rotation (X) du porte-satellites (6) et une seconde surface (23) opposée à la première surface (24), le canal (27) de chaque élément (22) étant formé au niveau de la première surface (24), la sortie (29) dudit canal (27) comportant un trou traversant ledit élément et débouchant sur la seconde surface (23).

## Patentansprüche

1. Planetenuntersetzungsgetriebe (1), insbesondere eines Turbinentriebwerks, welches ein inneres Planetengetriebe (2) und ein äußeres koaxiales Planetengetriebe (3) umfasst, wobei das innere Planetengetriebe (2) um seine Achse (X) drehbar ist und das äußere Planetengetriebe (3) feststehend ist, mindestens ein drehbar auf einen Planetenträger (6) montiertes, gleichzeitig in das innere Planetengetriebe (2) und das äußere Planetengetriebe (3) eingreifendes Planetenrad (4) umfasst, wobei der Planetenträger (6) drehbar um die Achse (X) des inneren Planetengetriebes (2) und des äußeren Planetengetriebes (3) montiert ist, das Planetenrad (4) eine zylindrische, um eine zylindrische Oberfläche (8) des Planetenträgers (6) drehbar montierte Innenfläche (7) aufweist, das Untersetzungegetriebe (1) des Weiteren Ölzuführmittel an der Grenzfläche (9) der besagten zylindrischen Oberflächen (7, 8) aufweist, die Ölzuführmittel eine Kammer (10) im Planetenträger (6) enthalten, um einen Ölpuffer zu bilden, und einen sogenannten unteren Bereich (15) umfassen, der von der Drehachse (X) des Planetenträgers (6) beabstandet ist, sowie einen sogenannten oberen Bereich (16), der an die Drehachse (X) des Planetenträgers (6) angenähert wird, mindestens einen Hauptkanal (19), der zur besagten Grenzfläche (9) und zum oberen Bereich (16) führt, und mindestens einen Nebenkanal (20a, 20b), der zu besagter Grenzfläche (9) und zum unteren Bereich (15) führt, **dadurch gekennzeichnet, dass** besagter Nebenkanal (20a, 20b) eine Vorrichtung umfasst, die einen Lastverlust generieren kann und durch die Stapelung von mindestens zwei Elementen (22) gebildet wird, wobei jedes Element (22) einen Fluidkanal (27) umfasst, der in der Lage ist, einen Lastverlust zu generieren, sowie einen Eingang (28) und einen Ausgang (29), wobei der Ausgang (29) bzw. der Eingang (28) des Kanals (27) eines der Elemente (22) mit dem Eingang (28) bzw. mit dem Ausgang (29) des Kanals (27) des anderen Elements (22) verbunden ist.

2. Untersetzungsgetriebe nach Anspruch 1, **dadurch gekennzeichnet, dass** die zur Generierung eines Lastverlusts fähige Vorrichtung Mittel (25, 26) zur Positionierung von Elementen (22) zueinander umfasst.

3. Untersetzungsgetriebe nach Anspruch 2, **dadurch gekennzeichnet, dass** mindestens eines der Elemente (22) einen Zentrierzapfen (25) enthält, der mit einer komplementären Aufnahme (26) eines daneben liegenden Elements (22) zusammen wirkt.

4. Untersetzungsgetriebe nach einem der Ansprüche 1 bis 3, **dadurch gekennzeichnet, dass** der Kanal (27) jedes Elements (22) eine generell labyrinthartige Form hat und mindestens einen Krümmungsbereich (30, 31, 32) umfasst.

5. Untersetzungsgetriebe nach einem der Ansprüche 1 bis 4, **dadurch gekennzeichnet, dass** der Kanal (27) von mindestens einem der Elemente (22) eine Vertiefung (33) aufweist, die dazu bestimmt ist, Partikel aufzufangen.

6. Untersetzungsgetriebe nach einem der Ansprüche 1 bis 5, **dadurch gekennzeichnet, dass** jedes Element (22) zwei einander gegenüber liegende Oberflächen (23, 24) umfasst, wobei der Kanal (27) an einer (24) der Oberflächen geformt wird, und der Eingang (28) oder der Ausgang (29) des Kanals (27) ein Loch enthalten, das durch dieses Element (22) führt und an der anderen Oberfläche (23) endet.

7. Untersetzungsgetriebe nach den Ansprüchen 1 und 2, **dadurch gekennzeichnet, dass** es mehrere zylindrische Elemente (22) mit gleicher Struktur umfasst, wobei der Eingang (28) und der Ausgang (29) des Kanals (27) jedes der Elemente (22) winkelförmig in einem bestimmten Winkel (α) beabstandet ist, und die Positioniermittel (25, 26) das winkelförmige Verschieben von zwei nebeneinander liegenden Elementen (22) mit dem gleichen Winkelwert (α) ermöglichen.

8. Untersetzungsgetriebe nach Anspruch 5, **dadurch gekennzeichnet, dass** sich die Vertiefung (33) vom Kanal (27) des entsprechenden Elements (22) in der entgegen gesetzten Richtung der Drehachse (X) des Planetenträgers (6) liegt, so dass Partikel durch Zentrifugalkraft aufgefangen werden können.

9. Untersetzungsgetriebe nach Anspruch 6, **dadurch gekennzeichnet, dass** jedes Element (22) eine erste, zur Drehachse (X) des Planetenträgers (6) zeigende Oberfläche (24) und eine zweite, der ersten Oberfläche (24) gegenüberstehende Oberfläche (23) umfasst, wobei der Kanal (27) von jedem Element (22) an der ersten Oberfläche (24) geformt wird und der Ausgang (29) besagten Kanals (27) ein Loch enthält, das durch besagtes Element führt und an der zweiten Oberfläche (23) endet.

## Claims

1. An epicyclic reduction gear (1), particularly for a turbomachine, comprising an internal sun gear (2) and an external sun gear (3), which are coaxial, with the internal sun gear (2) being movable in rotation about its axis (X), with the external sun gear (3) being stationary, with at least one planet gear (4) being mounted to be movable in rotation on a planet carrier (6) and meshing with both the internal sun gear (2) and with the external sun gear (3), with the planet carrier (6) being able to pivot about the axis (X) of the internal sun gear (2) and the external sun gear (3), with the planet gear (4) having a cylindrical inner surface (7) mounted to be movable in rotation around a cylindrical surface (8) of the planet carrier (6), with the reduction gear (1) further comprising means for supplying oil to the interface (9) between said cylindrical surfaces (7, 8), the oil supplying means comprising a chamber (10) provided in the planet carrier (6), intended to form a buffer volume of oil, and having a so-called lower zone (15) spaced from the axis of rotation (X) of the planet carrier (6), a so-called upper zone (16) close to the axis (X) of rotation of the planet carrier (6), at least one main passage (19) opening at said interface (9) and at the upper zone (16), and at least one secondary passage (20a, 20b) opening at said interface (9) and at the lower zone (15), **characterized in that** the said secondary passage (20a, 20b) comprises a device able to generate a pressure drop, obtained by stacking at least two elements (22), with each element (22) comprising a fluid circulation passage (27) able to generate a pressure drop and comprising an inlet (28) and an outlet (29), with the outlet (29), respectively the inlet (28) of the passage (27) of one of the elements (22) being connected to the inlet (28), respectively to the outlet (29) of the passage (27) of the other element (22).

2. A reduction gear according to claim 1, **characterized in that** the device adapted to generate a pressure loss comprises means (25, 26) for positioning elements (22) with respect to one another.

3. A reduction gear according to claim 2, **characterized in that** at least one of the elements (22) comprises a centering pin (25) cooperating with a complementary housing (26) of an adjacent element (22).

4. A reduction gear according to one of claims 1 to 3, **characterized in that** the passage (27) of each element (22) has the general shape of a labyrinth and comprises at least one bent region (30, 31, 32).

5. A reduction gear according to one of claims 1 to 4, **characterized in that** the passage (27) of at least one of the elements (22) has a recess (33) intended to trap particles.

6. A reduction gear according to one of claims 1 to 5, **characterized in that** each element (22) comprises two opposite surfaces (23, 24), with the passage (27) being formed at one (24) of the surfaces, with the inlet (28) or the outlet (29) of the passage (27) comprising a hole going through said element (22) and opening on the other surface (23).

7. A reduction gear according to the whole claims 1 and 2, **characterized in that** it comprises several cylindrical elements (22) having the same structure, with the inlet (28) and the outlet (29) of the passage (27) of each one of said elements (22) being angularly spaced by a determined angle (α), with the positioning means (25, 26) making it possible to angularly shift two adjacent elements (22) by the same angle value (α).

8. A reduction gear according to claim 5, **characterized in that** the recess (33) extends from the passage (27) of the corresponding element (22) in a direction opposite the axis of rotation (X) of the planet carrier (6), so as to be able to trap particles by centrifugation.

9. A reduction gear according to claim 6, **characterized in that** each element (22) has a first surface (24) facing the axis of rotation (X) of the planet carrier (6) and a second surface (23) opposite the first surface (24), with the passage (27) of each element (22) being formed at the first surface (24), with the outlet (29) of said passage (27) having a hole going through said element and opening on the second surface (23).
